# EUROPÄISCHE PATENTANMELDUNG

(11) **EP 4 322 265 A1**
(43) Veröffentlichungstag der Anmeldung: **14.02.2024**
(21) Anmeldenummer: 23184616.3
(22) Anmeldetag: 11.07.2023
(51) Int. Cl.: H01M 8/0297, H01M 8/1004, B32B 38/18

(54) **VERFAHREN UND VORRICHTUNG ZUR POSITIONSGENAUEN BEARBEITUNG EINER MATERIALBAHN**

(30) Priorität: 22.07.2022 DE 102022207518
(71) Anmelder: OPTIMA life science GmbH, 74523 Schwäbisch Hall (DE)
(72) Erfinder: Jansen, Johannes, 74545 Michelfeld (DE); Dylla, Norbert, 74541 Vellberg (DE)
(74) Vertreter: Patentanwälte Ruff, Wilhelm, Beier, Dauster & Partner mbB

(57) **Zusammenfassung**

Die Erfindung betrifft ein Verfahren und eine Vorrichtung zur positionsgenauen Bearbeitung einer Materialbahn in einem bahnverarbeitenden Prozess zur seriellen Herstellung von Produkten, insbesondere zur Herstellung von Membran-Baugruppen, wobei in die Materialbahn (1) ein Formelement (2) eingebracht oder an der Materialbahn (1) ein Formelement (2) aufgebracht wird, wobei beim Einbringen des Formelements (2) bzw. beim Aufbringen des Formelements (2) in oder an der Materialbahn mehrere Referenzmarken (3) pro Produkt erzeugt werden, und in einem nachfolgenden Prozessschritt für eine positionsgenaue Bearbeitung der Materialbahn (1) relativ zu dem Formelement (2) eines Produkts die Position mindestens einer der mehreren der Referenzmarken (3) dieses Produkts und/oder mindestens einer der mehreren Referenzmarken (3) eines nachfolgenden und/oder eines vorangehenden Produkts erfasst wird.

## Beschreibung

### ANWENDUNGSGEBIET UND STAND DER TECHNIK

Die Erfindung betrifft ein Verfahren und eine Vorrichtung zur positionsgenauen Bearbeitung einer Materialbahn in einem bahnverarbeitenden Prozess.

Als bahnverarbeitender Prozess wird ein Prozess bezeichnet, bei welchem eine Materialbahn einen oder mehrere, aufeinanderfolgende Prozessschritte durchläuft. Dabei erfährt die Materialbahn in jedem Prozessschritt Veränderungen, insbesondere aber nicht ausschließlich werden Teile der Materialbahn ausgeschnitten, andere Materialbahnen oder Zuschnitte hinzugefügt und/oder Teile von der Materialbahn abgezogen.

Beispielsweise ist es bekannt, eine Membran-Elektroden-Anordnung (MEA) oder Teile davon für eine Brennstoffzelle oder einen Elektrolyseur in einem bahnverarbeitenden Prozess herzustellen. Die MEA umfasst eine Katalysator-beschichtete Membran (engl. Catalyst Coated Membrane, kurz CCM), an welcher einseitig oder beidseitig Randverstärkungen oder Rahmen (engl. Subgasket, Frame oder Rim) aus kostengünstigerem und widerstandsfähigerem Material vorgesehen sind. Dabei ist es bekannt, für die Rahmen Materialbahnen bereitzustellen, wobei in die Materialbahnen Ausnehmungen für Fenster eingebracht werden und die CCM derart mit den Materialbahnen verbunden wird, dass ein aktiver Bereich in den Fenstern angeordnet wird und ein Rand des aktiven Bereichs der CCM durch die Fenster umgebende Bereiche abgedeckt wird. Alternativ oder zusätzlich zu Fenstern sind in anderen Ausgestaltungen an Materialbahnen für Rahmen oder andere Schichten weitere oder andere Ausnehmungen einzubringen, welche in einem späteren Materialverbund Kanalstrukturen oder Öffnungen für Anschlüsse bilden. Zusätzlich oder alternativ sind in Ausgestaltungen weitere Elemente, wie z.B. Gas-Diffusions-Lagen (GDL) als Zuschnitt positionsgenau zu den Fenstern zu platzieren.

Membran-Elektroden-Anordnungen für Brennstoffzellen oder Elektrolyseure und andere Laminate umfassend eine Membran sowie weitere Lagen, beispielsweise für einen Befeuchter, werden im Zusammenhang mit der Anmeldung als Membran-Baugruppen bezeichnet.

Für bestimmte Prozessschritte, insbesondere bei der Herstellung einer Membran-Baugruppe, besteht die Anforderung, diesen Prozessschritt in einer definierten Position relativ zu einem in oder an der Materialbahn vorhandenen Formelement, beispielsweise einem in der Materialbahn vorhandenen Fensterausschnitt, und/oder relativ zu einem an der Materialbahn vorhandenen Formelement, wie beispielsweise einem auf der Materialbahn abgelegten Zuschnitt oder einem Aufdruck, durchzuführen. Zu diesen Prozessschritten zählen beispielsweise, aber nicht abschließend, ein Ablegen eines Zuschnitts auf der Materialbahn, ein Verbinden einer Materialbahn mit einer zweiten Materialbahn, oder das Erzeugen von Stanzkonturen.

Um einen Prozessschritt in Bezug auf ein vorhandenes Formelement durchzuführen, ist es bekannt, eine Position des Formelements zu erfassen und eine Prozessstation oder Teile einer Prozessstation relativ zu der Materialbahn entsprechend einer detektierten Position der Formelemente auszurichten.

Ein Erfassen der Position der Formelemente ist jedoch teilweise nicht oder nur eingeschränkt möglich, beispielsweise wenn die Formelemente durch Produktbestandteile oder Teile einer Prozessstation verdeckt sind und damit nicht unmittelbar erfasst werden können.

Beispielsweise werden bei der Herstellung einer MEA in einem bahnverarbeitenden Prozess Zuschnitte auf Fensterausschnitten positioniert, wobei nachfolgende Stanzoperationen in Bezug auf diese Fensterausschnitte durchgeführt werden sollen. Dabei verdecken sowohl die auf den Fensterausschnitten abgelegten Zuschnitte als auch Teile der Prozessstation zur Durchführung der Stanzoperation die Fensterausschnitte.

Aus KR102322980 B1 ist es bekannt, an einer Stanzstation eine Aussparung vorzusehen, um ein Sensorsystem so anordnen zu können, dass eine Position eines auf der Materialbahn vorhandenen, und nicht durch die Materialbahn selbst verdeckten Formelements erfasst werden kann, um einen Stanzprozess positionsgenau relativ zu der erfassten Position des Formelements durchzuführen.

### AUFGABE UND LÖSUNG

Es sind Aufgaben der Erfindung, ein Verfahren und eine Vorrichtung zur positionsgenauen Bearbeitung einer Materialbahn in einem bahnverarbeitenden Prozess relativ zu einem an oder in der Materialbahn vorgesehenen Formelement zu schaffen.

Diese Aufgaben werden gelöst durch die Gegenstände mit den Merkmalen der Ansprüche 1 und 7. Vorteilhafte Ausgestaltungen ergeben sich aus den Unteransprüchen.

Gemäß einem ersten Aspekt wird ein Verfahren zur positionsgenauen Bearbeitung einer Materialbahn in einem bahnverarbeitenden Prozess zur seriellen Herstellung von Produkten, insbesondere zur Herstellung von Membran-Baugruppen geschaffen, wobei in die Materialbahn pro Produkt ein Formelement eingebracht oder an der Materialbahn ein Formelement aufgebracht wird, wobei beim Einbringen des Formelements bzw. beim Aufbringen des Formelements in oder an der Materialbahn mehrere Referenzmarken pro Produkt erzeugt werden, und wobei in einem nachfolgenden Prozessschritt für eine positionsgenaue Bearbeitung der Materialbahn relativ zu dem Formelement eines Produkts die Position mindestens einer der Referenzmarken dieses Produkts und/oder mindestens einer der mehreren Referenzmarken eines nachfolgenden und/oder eines vorangehenden Produkts erfasst wird.

Gemäß einem zweiten Aspekt wird eine Vorrichtung zur positionsgenauen Bearbeitung einer Materialbahn in einem bahnverarbeitenden Prozess zur seriellen Herstellung von Produkten, insbesondere zur Herstellung von Membran-Baugruppen, geschaffen, umfassend eine Formelement-Station, wobei die Formelement-Station eingerichtet ist, um in die Materialbahn pro Produkt ein Formelement einzubringen oder an der Materialbahn ein Formelement aufzubringen, wobei die Vorrichtung eingerichtet ist, um beim Einbringen des Formelements bzw. beim Aufbringen des Formelements in oder an der Materialbahn mehrere Referenzmarken pro Produkt zu erzeugen, wobei für eine nachfolgende positionsgenaue Bearbeitung der Materialbahn relativ zu dem Formelement eines Produkts die Position mindestens einer der Referenzmarken dieses Produkts und/oder mindestens einer der mehreren Referenzmarken eines nachfolgenden und/oder eines vorangehenden Produkt erfassbar ist.

Gemäß einem dritten Aspekt wird bahnverarbeitenden Anlage zur positionsgenauen fBearbeitung einer Materialbahn in einem bahnverarbeitenden Prozess zur seriellen Herstellung, von Produkten, insbesondere zur Herstellung von Membran-Baugruppen, geschaffen, umfassend eine Vorrichtung mit einer Formelement-Station, wobei die Formelement-Station eingerichtet ist, um in die Materialbahn pro Produkt ein Formelement einzubringen oder an der Materialbahn ein Formelement aufzubringen und um beim Einbringen des Formelements bzw. beim Aufbringen des Formelements in oder an der Materialbahn mehrere Referenzmarken pro Produkt zu erzeugen, und eine stromabwärts der Formelement-Station angeordnete Prozessstation zur Bearbeitung der Materialbahn, wobei die Prozessstation ein Sensorsystem, insbesondere ein optisches Sensorsystem umfassend eine Kamera aufweist, mittels dem für eine positionsgenaue Bearbeitung der Materialbahn relativ zu dem Formelement eines Produkts die Position mindestens einer der Referenzmarken dieses Produkts und/oder mindestens einer der mehreren Referenzmarken eines nachfolgenden und/oder eines vorangehenden Produkts an der Prozessstation erfassbar ist.

Die Begriffe "eine", "einer", etc. werden im Zusammenhang mit der Anmeldung lediglich als bestimmte Begriffe und nicht als Zählwörter verwendet. Insbesondere werden in Ausgestaltungen pro Produkt mehr als ein Formelement in oder an der Materialbahn eingebracht. Auch umfasst die bahnverarbeitende Anlage in Ausgestaltungen mehr als eine Prozessstation.

Ebenso werden die Begriffe "erster", "zweiter" etc. lediglich zur Unterscheidung von Elementen verwendet und geben keine Reihenfolge an.

Durch ein Erzeugen der Referenzmarken beim Einbringen bzw. Aufbringen des Formelements stehen die Referenzmarken und das Formelement in einem definierten geometrischen Zusammenhang, welcher bei einer weiteren Verarbeitung der Materialbahn erhalten bleibt. Daher können die Referenzmarken für nachfolgende Prozessschritte verwendet werden, um diese positionsgenau relativ zu dem an oder in der Materialbahn vorgesehenen Formelement durchzuführen.

Sofern zwei oder mehr nachfolgende Prozessschritte vorgesehen sind, ist in Ausgestaltungen vorgesehen, dass diese unterschiedliche Referenzmarken für eine positionsgenaue Bearbeitung erfassen, wobei jeweils eine oder mehrere Referenzmarken für die Positionierung erfasst werden, die weder durch Produktteile noch durch Teile einer Prozessstation beim Durchführen des jeweiligen Prozessschritts verdeckt ist.

Mittels der Referenzmarken ist eine Positionierung der Materialbahn relativ zu einer Prozessstation und/oder relativ zu einem anderen Bezugspunkt zur positionsgenauen Bearbeitung der Materialbahn relativ zu dem Formelement möglich, ohne dass die Position des Formelements selbst erfasst wird. Die Auswahl der erfassten Referenzmarke(n) ist dabei für jede Prozessstation individuell möglich, wobei jeweils eine oder mehrere Referenzmarken für die Positionierung erfasst werden, die weder durch Produktteile noch durch Teile der Prozessstation beim Durchführen des jeweiligen Prozessschritts verdeckt sind.

Die Positionierung an der Prozessstation ist daher unabhängig von einer Position und/oder Größe des zugehörigen Formelements und/oder einer Produktgröße eines durch die Bearbeitung der Materialbahn zu schaffenden End- oder Zwischenprodukts möglich. Dies ist besonders vorteilhaft, sofern in einer Anlage mehrere Prozessstationen mit unterschiedlichen Eigenschaften vorgesehen sind.

Dabei ist es denkbar, für die Positionierung relativ zu dem Formelement eines Produkts eine oder mehrere Referenzmarken zu erfassen, welche mit dem Formelement eines nachfolgenden oder vorangehenden Produkts eingebracht wurde. Dies ist insbesondere vorteilhaft, sofern in einer Anlage Produkte mit unterschiedlichen Produktgrößen hergestellt werden. Dabei kann durch geeignetes Einbringen der Referenzmarken und geeignete Wahl der zu erfassenden Referenzmarken an den Prozessstationen ein Wechsel zwischen den Produktgrößen erfolgen, ohne dass ein Sensorsystem zum Erfassen der Referenzmarken neu positioniert werden muss.

Als Referenzmarke wird im Zusammenhang mit der Anmeldung jedwede Markierung an einer Materialbahn bezeichnet, welche mittels eines Sensorsystems erfassbar ist. In vorteilhaften Ausgestaltungen sind optisch erfassbare Referenzmarken, wie Farbmarkierungen, Stanzmarkierungen, Prägemarkierungen oder dergleichen vorgesehen. Die Gestaltung der Referenzmarken ist durch den Fachmann in Abhängigkeit einer Materialbahn und/oder einer Formelement-Station zur Ein- oder Aufbringung des Formelements geeignet wählbar.

In vorteilhaften Ausgestaltungen ist vorgesehen, dass die Position der Referenzmarke mittels eines optischen Sensorsystems, insbesondere eines Sensorsystems umfassend eine Kamera erfasst wird. Optische Sensorsysteme zeichnen sich durch eine hohe Robustheit, eine hohe Genauigkeit und eine hohe Flexibilität aus.

Je nach Gestaltung der Referenzmarke und/oder eines eingesetzten Systems zur Erfassung der Referenzmarke kann dabei exakt eine Referenzmarke pro Formelement ausreichend sein, um basierend auf der Referenzmarke eine Lage und Orientierung dieses Formelements in einer Ebene zu erfassen. Sofern nur eine Lageabweichung für eine positionsgenaue Bearbeitung zu erfassen ist, wird in einer Ausgestaltung die Position exakt einer Referenzmarke für eine Ausrichtung der Materialbahn und/oder der Prozessstation erfasst. Durch die Erfassung der Position einer Referenzmarke lassen sich Lageabweichung in Transportrichtung der Bahn und quer dazu ermitteln. In anderen Ausgestaltungen werden zwei oder mehr Referenzmarken für die positionsgenaue Bearbeitung der Materialbahn relativ zu diesem Formelement erfasst. Durch die Erfassung der Positionen von zwei Referenzmarken lässt sich zusätzlich eine Winkelabweichung der Bahn zur Maschinenlängsachse ermitteln sowie andere Abweichungen.

In einer Ausgestaltung ist vorgesehen, dass das Formelement mittels eines Werkzeugs in die Materialbahn eingebracht oder an der Materialbahn aufgebracht wird, wobei die Referenzmarken beim Einbringen des Formelements bzw. beim Aufbringen des Formelements mittels dieses Werkzeugs erzeugt werden.

Als Werkzeug wird im Zusammenhang mit der Anmeldung jedwedes Betriebsmittel bezeichnet, mittels welchem die Formelemente in oder an der Materialbahn erzeugbar sind. In einer Ausgestaltung ist das Werkzeug ein Stanzwerkzeug, beispielsweise ein Stanzstempel einer Hubstanze oder eine Stanzwalze einer Rotationsstanze gestaltet, wobei das Stanzwerkzeug zusätzliche Konturen zum Erzeugen der Referenzmarken aufweist. Die Konturen sind dabei in einer Ausgestaltung als Stanzkonturen gestaltet. In anderen Ausgestaltungen sind die Konturen als Prägekonturen gestaltet. In wieder einer anderen Ausgestaltung ist das Werkzeug ein Werkzeug für eine additive Bearbeitung der Materialbahn und/oder ein Printwerkzeug zum Bedrucken der Materialbahn. Wobei bei der additiven Bearbeitung bzw. bei Bedrucken zum Aufbringen des Formelements gleichzeitig eine Referenzmarke additiv auf der Materialbahn aufgebracht oder auf die Materialbahn aufgedruckt wird.

In Ausgestaltungen ist vorgesehen, dass die Referenzmarken in oder an einem Übermaßbereich der Materialbahn erzeugt werden. Als Übermaßbereich wird ein Bereich der Materialbahn bezeichnet, welcher außerhalb eines in dem bahnverarbeitenden Prozess zu erzeugenden Produkts liegt. Durch Erzeugen der Referenzmarke in einem Übermaßbereich ist sichergestellt, dass eingebrachte Referenzmarken nicht an einem erzeugten Produkt vorhanden sind. Je nach Eigenschaften der Referenzmarken können diese jedoch in anderen Ausgestaltungen auch Elemente des fertigen Produkts bilden. Beispielsweise ist es denkbar, dass Referenzmarken in Form von Prägungen für eine abschließende Fixierung einer Materialbahn mit einer weiteren Materialbahn genutzt werden. In Ausgestaltungen ist vorgesehen, dass die Referenzmarke in einem Rand der Materialbahn erzeugt wird. Die Anordnung an einem Rand der Materialbahn ist, unabhängig von einer Anordnung in einem Übermaßbereich, für eine Anordnung eines Sensorsystems und eine Erfassbarkeit mittels des Sensorsystems vorteilhaft.

In einem bahnverarbeitenden Prozess werden Formelemente in einer kontinuierlichen Folge mit konstanten Abständen ein- oder aufgebracht. Durch ein Erzeugen der Referenzmarken beim Einbringen bzw. Aufbringen des Formelements wird in oder an der Materialbahn eine kontinuierliche Folge an Referenzmarken entsprechend einer Folge der Formelemente erzeugt.

In einer Ausgestaltung ist dabei vorgesehen, dass eine konstante Folge an äquidistanten Referenzmarken erzeugt wird. Die konstante Folge hat den Vorteil, dass die Referenzmarken auch für andere Aufgaben, wie beispielsweise eine Geschwindigkeitsüberwachung nutzbar sind. Der Abstand der Referenzmarken ist dabei derart gewählt, dass der Abstand der Formelemente ein ganzzahliges Vielfaches des Abstands der Referenzmarken ist.

Alternativ oder zusätzlich ist in einer Ausgestaltung vorgesehen, dass in der Materialbahn zwei Folgen an Referenzmarken entlang von zwei Spuren erzeugt werden. Je nach Gestaltung können nur zwei oder mehr als zwei Spuren vorgesehen sein. Dabei kann jede Prozessstation wahlweise eine oder mehrere Referenzmarken einer Spur oder mehr als einer Spur nutzen. Dadurch ist eine hohe Präzision bei der Erfassung der Positionierung des Formelements für den nachfolgenden Prozessschritt möglich.

In einer Ausgestaltung werden in allen auf ein Erzeugen der Referenzmarken nachfolgenden Prozessschritten ausschließlich die Referenzmarken für eine Positionierung der Materialbahn relativ zu einer Prozessstation und/oder für eine Positionierung von mit der Materialbahn zu verbindenden weiteren Materialbahnen und/oder Formelementen genutzt. In anderen Ausgestaltungen werden die Referenzmarken nur in einem oder mehreren Prozessschritten genutzt, während in anderen Prozessschritten andere Elemente, beispielsweise das mit den Referenzmarken eingebrachte Formelement und/oder zusätzliche Formelemente genutzt werden.

In einer Ausgestaltung wird in einem auf ein Erzeugen der Referenzmarken nachfolgenden Prozessschritt bzw. in einer nachfolgend zu der Formelement-Station angeordneten Prozessstation die Position mindestens einer Referenzmarke relativ zu einem ortsfesten Bezugspunkt an der Prozessstation und/oder relativ zu einem verstellbar gelagerten Element der Prozessstation, beispielsweise einem in der Lage justierbaren Werkzeug, erfasst.

In einer Ausgestaltung ist alternativ oder zusätzlich vorgesehen, dass in einem auf ein Erzeugen der Referenzmarken nachfolgenden Prozessschritt pro Produkt in die Materialbahn ein zusätzliches Formelement eingebracht oder an der Materialbahn ein zusätzliches Formelement aufgebracht wird, wobei in einem weiteren Prozessschritt die Position des zusätzlichen Formelements und die Position mindestens einer Referenzmarke erfasst werden. Der weitere Prozessschritt dient dabei in einer Ausgestaltung als Kontrollschritt um eine korrekte Positionierung des zusätzlichen Formelements auf der Materialbahn zu überprüfen. Bei dem zusätzlichen Formelement handelt es sich in einer Ausgestaltung um einen auf die Materialbahn abgelegten Zuschnitt. In anderen Ausgestaltungen handelt es sich bei dem zusätzlichen Formelement um einen auf die Materialbahn aufgebrachten Aufdruck oder eine in die Materialbahn eingebrachte Ausnehmung.

In einer weiteren Ausgestaltung ist alternativ oder zusätzlich vorgesehen, dass in einem auf ein Erzeugen der Referenzmarken nachfolgenden Prozessschritt die Materialbahn (auch als erste Materialbahn bezeichnet) mit einer zweiten Materialbahn laminiert wird, wobei auch in die zweite Materialbahn Formelemente und Referenzmarken eingebracht werden, wobei die Position mindestens einer Referenzmarke der (ersten) Materialbahn relativ zu der Position mindestens einer Referenzmarke der zweiten Materialbahn erfasst wird. Eine erfasste Relativposition der Referenzmarken ist dabei auswertbar, um die Phasenlage der Formelemente der zweiten Materialbahn relativ zu denen der ersten Materialbahn zu prüfen und ggf. zu korrigieren. Dies ist insbesondere vorteilhaft, wenn das Formelement der zweiten Materialbahn deckungsgleich und/oder in einer definierten Lage relativ zu dem Formelement der ersten Materialbahn positioniert werden soll.

### KURZBESCHREIBUNG DER ZEICHNUNGEN

Weitere Vorteile und Aspekte der Erfindung ergeben sich aus den Ansprüchen und aus der Beschreibung von Ausführungsbeispielen der Erfindung, die nachfolgend anhand der Figuren erläutert sind. Dabei zeigen:
- Fig. 1: eine Draufsicht auf eine Vorrichtung zur positionsgenauen Bearbeitung einer Materialbahn in einem bahnverarbeitenden Prozess;
- Fig. 2: eine Draufsicht auf die Materialbahn gemäß Fig. 1 bei einem ersten Prozessschritt in einem bahnverarbeitenden Prozess;
- Fig. 3: eine Draufsicht auf die Materialbahn gemäß Fig. 1 bei einem zweiten Prozessschritt in einem bahnverarbeitenden Prozess;
- Fig. 4: eine Draufsicht auf ein zweites Ausführungsbeispiel einer Vorrichtung zur positionsgenauen Bearbeitung einer Materialbahn in einem bahnverarbeitenden Prozess;
- Fig. 5: eine Draufsicht auf die Materialbahn gemäß Fig. 4 bei einem nachfolgenden Prozessschritt in einem bahnverarbeitenden Prozess;
- Fig. 6: eine Draufsicht auf ein drittes Ausführungsbeispiel einer Vorrichtung zur positionsgenauen Bearbeitung einer Materialbahn in einem bahnverarbeitenden Prozess;
- Fig. 7: eine Draufsicht auf eine alternativ bearbeitete Materialbahn bei dem zweiten Prozessschritt gemäß Fig. 3; und
- Fig. 8: eine Draufsicht auf eine alternativ bearbeitete Materialbahn bei dem ersten Prozessschritt gemäß Fig. 2.

### DETAILLIERTE BESCHREIBUNG DER AUSFÜHRUNGSBEISPIELE

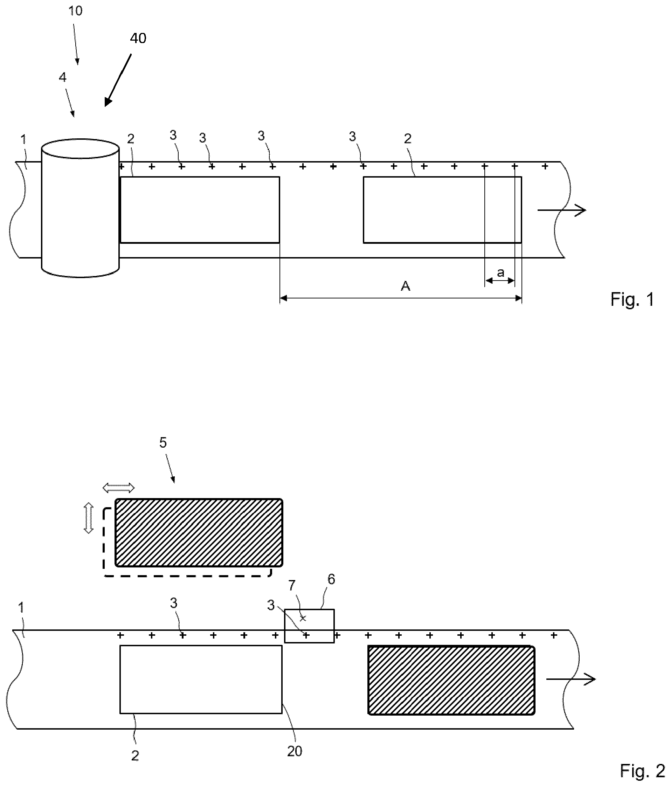

Fig. 1 zeigt eine Draufsicht auf eine Vorrichtung 10 zur positionsgenauen Bearbeitung einer Materialbahn 1 in einem bahnverarbeitenden Prozess zur seriellen Herstellung von Produkten. Eine Transportrichtung der Materialbahn 1 ist dabei schematisch durch einen Pfeil dargestellt.

In die dargestellte Materialbahn 1 ist für jedes herzustellenden Produkt ein Formelement 2 in Form eines Fensterausschnitts eingebracht. Die dargestellten Fensterausschnitte sind rechteckig. In anderen Ausgestaltungen sind anders gestaltete Fensterausschnitte und/oder andere Formelemente 2 und/oder mehr als ein Formelement pro Produkt vorgesehen.

Ein Einbringen der Formelemente 2 in Form von Fensterausschnitten erfolgt an einer Formelement-Station 40. In dem dargestellten Ausführungsbeispiel erfolgt ein Einbringen der Formelemente 2 in Form von Fensterausschnitten mittels einer schematisch dargestellten Stanzeinrichtung umfassend einen Stanzzylinder 4. In anderen Ausgestaltungen ist eine Hubstanze oder eine Schneideinrichtung zum Einbringen der Fensterausschnitte vorgesehen. Je nach Formelement sind in anderen Ausgestaltungen anstelle der Stanzeinrichtung andere Werkzeuge zum Einbringen oder Aufbringen des Formelements vorgesehen.

Mittels der Vorrichtung 1 werden in die Materialbahn 1 beim Einbringen der Formelemente 2 Referenzmarken 3 eingebracht. Dabei wird bei dem in Fig. 1 dargestellten Ausführungsbeispiel mittels des Stanzzylinders 4 zum Einbringen der Formelemente 2 auch eine Folge an Referenzmarken 3 eingebracht.

Die Referenzmarken 3 sind in dem dargestellten Ausführungsbeispiel äquidistant in einem Abstand a eingebracht. Ein Abstand A der Formelemente 2 ist ein ganzzahliges Vielfaches des Abstands a der Referenzmarken 3. In dem dargestellten Ausführungsbeispiel das Achtfache des Abstands a, die Gestaltung ist jedoch lediglich beispielhaft.

Für jedes Formelement 2 sind somit mehrere Referenzmarken 3 vorgesehen, welche zusammen mit dem Formelement 2 in die Materialbahn 1 eingebracht werden und daher mit dem zugehörigen Formelement 2 in einem durch den Stanzzylinder 4 definierten geometrischen Zusammenhang stehen.

In dem dargestellten Ausführungsbeispiel sind für jedes Formelement 2 acht Referenzmarken 3 vorgesehen, welche alle mit dem zugehörigen Formelement 2 in einem definierten geometrischen Zusammenhang stehen.

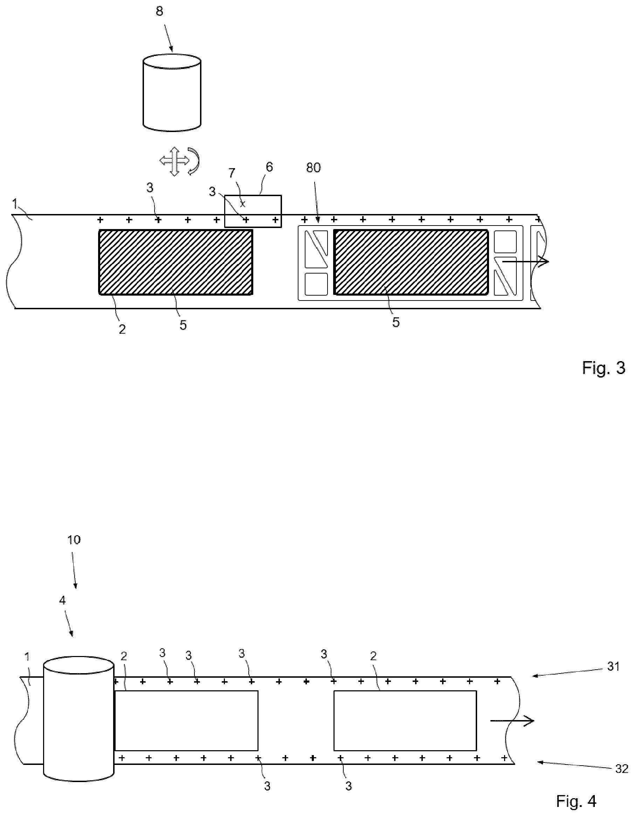

Wie weiter unten anhand der Figuren 2 und 3 beschrieben, ist für eine nachfolgende positionsgenaue Bearbeitung der Materialbahn 1 relativ zu den Formelementen 2 jeweils die Position mindestens einer Referenzmarke 3 erfassbar.

Fig. 2 zeigt schematisch eine Draufsicht auf die Materialbahn 1 gemäß Fig. 1 bei einem ersten Prozessschritt zum Ablegen von Zuschnitten 5 auf den als Fensterausschnitten gestalteten Formelementen 2.

Dabei wird in dem dargestellten Ausführungsbeispiel mittels einer Sensoreinrichtung 6 eine Position einer Referenzmarke 3, welche stromaufwärts einer Vorderkante 20 eines mit dem Zuschnitt 5 abzudeckenden Formelements 2 liegt, erfasst. Diese Referenzmarke 3 steht mit dem zugehörigen Formelement 2 in einem definierten geometrischen Zusammenhang. In dem dargestellten Ausführungsbeispiel wird die Position exakt einer Referenzmarke 3 relativ zu einem feststehenden Referenzpunkt 7 erfasst. Basierend auf dieser erfassten Position der Referenzmarke 3 kann - wie schematisch durch zwei Doppelpfeile angedeutete - eine Position des Zuschnitts 5 in Längsrichtung und/oder in Querrichtung der Materialbahn 1 korrigiert werden, um ein positionsgenaues Ablegen des Zuschnitts 5 auf dem zugehörigem als Fensterausschnitt gestalteten Formelement 2 zu ermöglichen.

Fig. 3 zeigt schematisch eine Draufsicht auf die Materialbahn 1 gemäß Fig. 1 bei einem zweiten Prozessschritt zum Einbringen von Stanzkonturen 80 mittels einer schematisch dargestellten Stanzwalze 8.

Dabei werden in dem dargestellten Ausführungsbeispiel mittels einer weiteren Sensoreinrichtung 6 die Positionen von zwei Referenzmarken 3, welche stromaufwärts bzw. stromabwärts der Vorderkante 20 (vgl. Fig. 2) des für die Bearbeitung relevanten Formelements 2 eines Produkts liegen, erfasst. Die beide Referenzmarken 3 stehen mit diesem Formelement 2 in einem definierten geometrischen Zusammenhang. In dem dargestellten Ausführungsbeispiel werden die Positionen der zwei Referenzmarken 3 relativ zu einem feststehenden Referenzpunkt 7 erfasst. Basierend auf den erfassten Positionen der zwei Referenzmarken 3 kann eine Position und Orientierung der Stanzwalze 8 in einer Ebene parallel zur Ebene der Materialbahn 1 korrigiert werden, um ein positionsgenaues Einbringen der Stanzkonturen 80 relativ zu dem zugehörigem Formelement 2 zu ermöglichen. Die positionsgenaue Bearbeitung relativ zu dem Formelement 2 ist dabei mit einer oberhalb der Materialbahn 1 angeordneten Sensoreinrichtung 6 möglich, obwohl das Formelement durch den Zuschnitt 5 verdeckt ist.

Die Positionen der zwei Referenzmarken 3 werden bei der in Fig. 3 dargestellten Ausgestaltung mittels einer einzigen Sensoreinrichtung 6 erfasst. Anstelle von einer einzigen Sensoreinrichtung 6 sind in anderen Ausgestaltungen mehrere Sensoreinrichtungen 6 vorgesehen, deren Signale für eine positionsgenaue Bearbeitung der Materialbahn zusammen ausgewertet werden.

Wie in Fig. 3 erkennbar, sind die Referenzmarken 3 an einem Übermaßbereich der Materialbahn 1 angeordnet, d.h. in einem Bereich, welcher außerhalb des herzustellenden Produkts liegt. In dem in den Fig. 1 bis 3 dargestellten Ausführungsbeispiel sind die Referenzmarken 3 an einem Rand der Materialbahn angeordnet.

Die Erfassung von exakte einer oder zwei Referenzmarken 3 in den Prozessschritten gemäß den Fig. 2 und 3 ist lediglich beispielhaft. In anderen Ausgestaltungen werden bei dem Prozessschritt gemäß Fig. 2 mehr als eine Referenzmarke 3 oder bei dem Prozessschritt gemäß Fig. 3 nur eine Referenzmarke 3 erfasst. In wieder anderen Ausgestaltungen sind weitere oder alternative Prozessschritte vorgesehen.

In einer weiteren Ausgestaltung ist zusätzlich zu der in Fig. 2 oder Fig. 3 dargestellten Sensoreinrichtung 6 eine weitere, in den Figuren nicht dargestellte Sensoreinrichtung vorgesehen, welche eingerichtet ist, um die Position des Zuschnitts 5 zu erfassen. Dabei ist in einer Ausgestaltung vorgesehen, dass zwischen den in Fig. 2 und 3 dargestellten Prozessschritten die Position des Zuschnitts 5 und die Position mindestens einer Referenzmarke 3 erfasst werden, um eine korrekte Positionierung des Zuschnitts 5 auf der Materialbahn zu überprüfen.

Fig. 4 zeigt eine Draufsicht auf ein zweitens Ausführungsbeispiel einer Vorrichtung 10 zur positionsgenauen Bearbeitung einer Materialbahn 1 in einem bahnverarbeitenden Prozess. Die Vorrichtung 10 gemäß Fig. 4 ist ähnlich der Vorrichtung 10 gemäß Fig. 1 und für gleiche oder ähnliche Elemente werden übereinstimmende Bezugszeichen verwendet.

Im Unterschied zu der Gestaltung gemäß Fig. 1 sind an der Materialbahn 1 gemäß Fig. 4 zwei Folgen an Referenzmarken 3 entlang von zwei Spuren 31, 32 vorgesehen. Die Referenzmarken 3 der zwei Spuren 31, 32 weisen in dem dargestellten Ausführungsbeispiel den gleichen Abstand auf. In anderen Ausgestaltungen sind die Abstände der Referenzmarken 3 der zwei Spuren unterschiedlich. In dem dargestellten Ausführungsbeispiel sind die Spuren 31, 32 in der durch einen Pfeil dargestellten Transportrichtung der Materialbahn versetzt. In anderen Ausgestaltungen sind die Referenzmarken der zwei Spuren 31, 32 in Transportrichtung auf gleicher Höhe angeordnet.

Für eine Ausrichtung der Materialbahn 1 und/oder der Prozessstation für einen Prozessschritt sind dabei die Positionen von mindestens einer Referenzmarke 3 aus einer der zwei Spuren erfassbar.

Wie schematisch in Fig, 5 dargestellt, werden dabei in Ausgestaltungen die Positionen von jeweils mindestens einer Referenzmarke 3 jeder der zwei Spuren 31, 32 mittels einer ersten Sensoreinrichtung 6 relativ zu einem ersten Bezugspunkt 7 und mittels einer zweiten Sensoreinrichtung 11 relativ zu einem Bezugspunkt 12 erfasst.

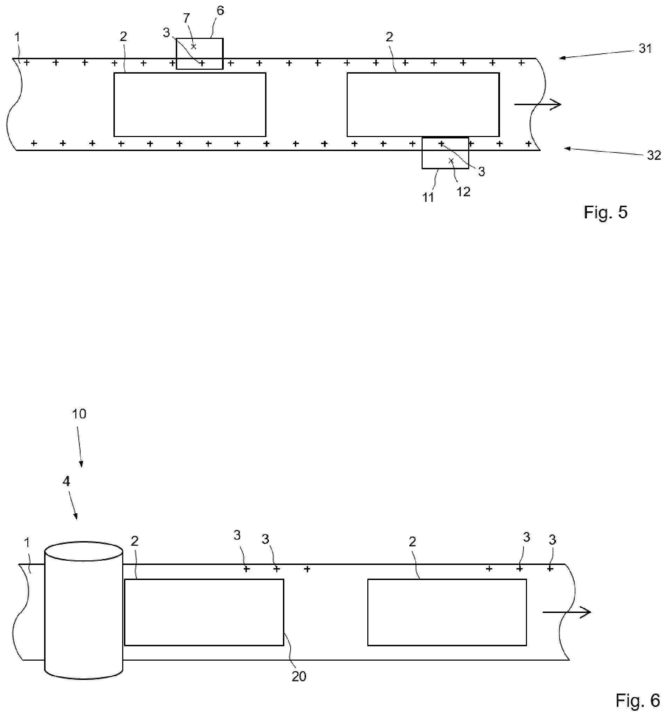

In dem in den Fig. 4 und 5 dargestellten Ausführungsbeispiel sind die Spuren 31, 32 an gegenüberliegenden Bahnrändern angeordnet. Dadurch kann ein Abstand zwischen Referenzmarken 3, deren Position für eine Ausrichtung erfasst wird, maximiert werden, sodass eine hohe Genauigkeit für eine positionsgenaue Bearbeitung der Materialbahn relativ zu dem Formelement erzielbar ist. In anderen (nicht dargestellten) Ausgestaltungen sind die Spuren 31, 32 an einem gemeinsamen Rand der Materialbahn angeordnet.

Fig. 6 zeigt eine Draufsicht auf ein drittes Ausführungsbeispiel einer Vorrichtung 10 zur positionsgenauen Bearbeitung einer Materialbahn 1 in einem bahnverarbeitenden Prozess.

Im Unterschied zu der Gestaltung gemäß Fig. 1 werden an der Materialbahn 1 gemäß Fig. 6 jeweils nur drei Referenzmarken 3 pro Produkt erzeugt. Für jedes Produkt ist ein Formelement 2 vorgesehen, wobei die Referenzmarken 3 in dem dargestellten Ausführungsbeispiel im Bereich einer Vorderkante 20 des Formelements 2 angeordnet sind. Diese Anordnung ist jedoch lediglich beispielhaft.

Die drei Referenzmarken 3 bilden ein Muster, wobei sich das Muster in einer konstanten Folge in Längsrichtung der Materialbahn 1 wiederholt. Ein Abstand der Muster ist dabei gleich einem Abstand der Formelemente.

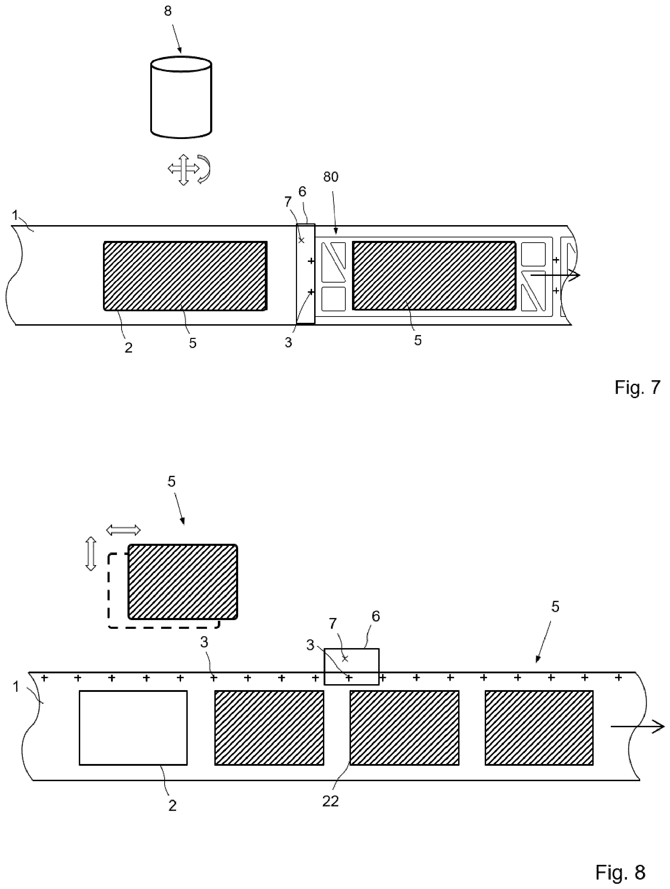

Fig. 7 zeigt eine Draufsicht auf eine alternativ bearbeitete Materialbahn 1 bei dem zweiten Prozessschritt gemäß Fig. 3.

Im Unterschied zu der Gestaltung gemäß Fig. 3 sind an der Materialbahn 1 gemäß Fig. 7 jeweils nur zwei Referenzmarken 3 pro Produkt vorgesehen. Die Referenzmarken 3 sind in dem in Fig. 6 dargestellten Ausführungsbeispiel nicht im Randbereich, sondern zwischen den Formelementen 2, in einem Übermaßbereich der zu erzeugenden Produkte eingebracht.

Fig. 8 zeigt schematisch eine Draufsicht auf eine Materialbahn 1 bei dem ersten Prozessschritt gemäß Fig. 2 zum Ablegen von Zuschnitten 5 auf den als Fensterausschnitten gestalteten Formelementen 2. Die bei dem Ausführungsbeispiel gemäß Fig. 8 hergestellten Produkte unterscheiden sich in einer Produktgröße von den bei dem Ausführungsbeispiel gemäß Fig. 2 hergestellten Produkten, wobei für jedes Produkt ein Formelement 2 vorgesehen ist.

Dabei wird in dem in Fig. 8 dargestellten Ausführungsbeispiel für ein positionsgenaues Ablegen des Zuschnitts 5 auf dem Formelement 2 eines Produkts mittels einer Sensoreinrichtung 6 eine Position einer Referenzmarke 3 erfasst, welche stromabwärts einer Hinterkante 22 eines bereits abgedeckten Formelements 2 eines vorangehenden Produkts liegt.

Die dargestellten Ausführungsbeispiele sind lediglich beispielhaft und des sind zahlreiche Abwandlungen denkbar.

Die dargestellten Vorrichtungen und beschriebenen Verfahren sind insbesondere bei der Herstellung einer Membran-Baugruppe, wie beispielsweise einer MEA vorteilhaft einsetzbar.

Bei der Materialbahn 1 handelt es sich dabei in einer Ausgestaltung um eine Materialbahn aus einem Rahmenmaterial, in welche Formelemente 2 in Form von Fensterausschnitten mittels eines Stanzwerkzeugs eingebracht werden. Auf die Fensterausschnitte wird die CCM abgelegt. Für eine exakte Positionierung einer CCM relativ zu einem Fensterausschnitt wird eine Position mindestens einer Referenzmarke 3 erfasst. Anhand der erfassten Position der Referenzmarke 3 werden die CCM und die Materialbahn 1 relativ zueinander ausgerichtet und die CCM auf dem Fensterausschnitt abgelegt. Die CCM verdeckt nach dem Übertrag an die Materialbahn 1 den Fensterausschnitt, nicht jedoch die Referenzmarken 3.

Eine korrekte Positionierung der CCM auf der Materialbahn relativ zu dem verdeckten Fensterausschnitt kann dabei durch Erfassen der Position mindestens einer Referenzmarke 3 und gleichzeitiges Erfassen der Position der CCM überprüft werden.

Nach dem Übertragen der CCM an die Materialbahn 1 sind in die Materialbahn Ausnehmungen einzubringen, welche in der fertigen MEA Kanalstrukturen oder Öffnungen für Anschlüsse bilden. Für eine exakte Positionierung der Ausnehmungen relativ zu dem durch die CCM verdeckten Fensterausschnitt wird in einer Ausgestaltung eine Position mindestens einer Referenzmarke 3 erfasst. Anhand der erfassten Position der Referenzmarke 3 werden ein Werkzeug zum Einbringen der Ausnehmungen und die Materialbahn 1 relativ zueinander ausgerichtet. Alternativ wird zu diesem Zweck die Position der CCM erfasst, wobei eine korrekte Positionierung der CCM vorzugsweise anhand der Referenzmarken 3 überprüft wurde.

## Patentansprüche

1. Verfahren zur positionsgenauen Bearbeitung einer Materialbahn (1) in einem bahnverarbeitenden Prozess zur seriellen Herstellung von Produkten, insbesondere zur Herstellung von Membran-Baugruppen, wobei pro Produkt in die Materialbahn (1) ein Formelement (2) eingebracht oder an der Materialbahn (1) ein Formelement (2) aufgebracht wird, **dadurch gekennzeichnet, dass** beim Einbringen des Formelements (2) bzw. beim Aufbringen des Formelements (2) in oder an der Materialbahn mehrere Referenzmarken (3) pro Produkt erzeugt werden, und in einem nachfolgenden Prozessschritt für eine positionsgenaue Bearbeitung der Materialbahn (1) relativ zu dem Formelement (2) eines Produkts die Position mindestens einer der mehreren Referenzmarken (3) dieses Produkts und/oder mindestens einer der mehreren Referenzmarken (3) eines nachfolgenden und/oder mindestens einer der mehreren Referenzmarken (3) eines vorangehenden Produkts erfasst wird.

2. Verfahren nach Anspruch 1, **dadurch gekennzeichnet, dass** das Formelement (2) mittels eines Werkzeugs (4) in die Materialbahn (1) eingebracht oder an der Materialbahn (1) aufgebracht wird, wobei die Referenzmarken beim Einbringen des Formelements (2) bzw. beim Aufbringen des Formelements (2) mittels dieses Werkzeugs (4) erzeugt werden.

3. Verfahren nach Anspruch 1 oder 2, **dadurch gekennzeichnet, dass** die Referenzmarken (3) in oder an einem Übermaßbereich der Materialbahn erzeugt werden, insbesondere in oder an einem Rand der Materialbahn.

4. Verfahren nach Anspruch 1, 2 oder 3 **dadurch gekennzeichnet, dass** eine konstante Folge (4) an äquidistanten Referenzmarken (3) erzeugt wird, wobei ein Abstand der Formelemente (2) ein ganzzahliges Vielfaches eines Abstands (a) der Referenzmarken (3) ist.

5. Verfahren nach einem der Ansprüche 1 bis 4, **dadurch gekennzeichnet, dass** in der Materialbahn (1) zwei Folgen an Referenzmarken (3) entlang von zwei Spuren (31, 32) erzeugt werden.

6. Verfahren nach einem der Ansprüche 1 bis 5, **dadurch gekennzeichnet, dass** in einem auf ein Erzeugen der Referenzmarken nachfolgenden Prozessschritt in die Materialbahn (1) pro Produkt ein zusätzliches Formelement eingebracht oder an der Materialbahn (1) ein zusätzliches Formelement aufgebracht wird, wobei in einem weiteren Prozessschritt die Position des zusätzlichen Formelements und mindestens einer Referenzmarke erfasst werden.

7. Verfahren nach einem der Ansprüche 1 bis 6, **dadurch gekennzeichnet, dass** in einem auf ein Erzeugen der Referenzmarken (3) nachfolgenden Prozessschritt die Materialbahn (1) mit einer zweiten Materialbahn laminiert wird, wobei in die zweite Materialbahn vor dem Laminieren pro Produkt ein Formelement und mindestens eine Referenzmarke eingebracht wird, wobei die Position mindestens einer Referenzmarke der Materialbahn (1) relativ zu der Position mindestens einer Referenzmarke der zweiten Materialbahn erfasst wird.

8. Vorrichtung zur positionsgenauen Bearbeitung einer Materialbahn (1) in einem bahnverarbeitenden Prozess zur seriellen Herstellung von Produkten, insbesondere zur Herstellung von Membran-Baugruppen, umfassend eine Formelement-Station, wobei die Formelement-Station eingerichtet ist, um in die Materialbahn (1) pro Produkt ein Formelement (2) einzubringen oder an der Materialbahn (1) ein Formelement (2) aufzubringen, **dadurch gekennzeichnet, dass** die Formelement-Station eingerichtet ist, um beim Einbringen des Formelements (2) bzw. beim Aufbringen des Formelements (2) in oder an der Materialbahn mehrere Referenzmarken (3) pro Produkt zu erzeugen, wobei für eine nachfolgende positionsgenaue Bearbeitung der Materialbahn (1) relativ zu dem Formelement (2) eines Produkts die Position mindestens einer der mehreren Referenzmarken (3) dieses Produkts und/oder mindestens einer der mehreren Referenzmarken (3) eines nachfolgenden und/oder mindestens einer der mehreren Referenzmarken (3) eines vorangehenden Produkts erfassbar ist.

9. Vorrichtung nach Anspruch 8, **dadurch gekennzeichnet, dass** an der Formelement-Station ein Werkzeug (4) zum Einbringen oder Aufbringen des Formelements (2) vorgesehen ist, wobei das Werkzeug (4) eingerichtet ist, um beim Einbringen des Formelements (2) bzw. beim Aufbringen des Formelements (2) in oder an der Materialbahn die Referenzmarken (3) zu erzeugen.

10. Vorrichtung nach Anspruch 8 oder 9, **dadurch gekennzeichnet, dass** die Formelement-Station, insbesondere das Werkzeug (4), eingerichtet ist, um die Referenzmarken (3) an einem Übermaßbereich der Materialbahn (1) zu erzeugen, insbesondere an einem Rand der Materialbahn.

11. Vorrichtung nach Anspruch 8, 9 oder 10, **dadurch gekennzeichnet, dass** die Formelement-Station, insbesondere das Werkzeug (4), eingerichtet ist, um an der Materialbahn eine konstante Folge an äquidistanten Referenzmarken (3) zu erzeugen, wobei ein Abstand (A) der Formelemente (2) ein ganzzahliges Vielfaches eines Abstands (a) der Referenzmarken (3) ist und/oder um in der Materialbahn (1) zwei Folgen an Referenzmarken (3) entlang von zwei Spuren (31, 32) zu erzeugen.

12. Bahnverarbeitenden Anlage umfassend eine Vorrichtung (10) nach einem der Ansprüche 8 bis 11 und eine stromabwärts der Formelement-Station angeordnete Prozessstation zur Bearbeitung der Materialbahn (1), wobei die Prozessstation ein Sensorsystem (6), insbesondere ein optisches Sensorsystem umfassend eine Kamera aufweist, mittels dem die Position mindestens einer der Referenzmarken dieses Produkts und/oder mindestens einer der mehreren Referenzmarken eines nachfolgenden und/oder eines vorangehenden Produkts an der Prozessstation erfassbar ist.
